# EUROPÄISCHE PATENTANMELDUNG

(11) **EP 1 908 637 A1**
(43) Veröffentlichungstag der Anmeldung: **09.04.2008**
(21) Anmeldenummer: 07019305.7
(22) Anmeldetag: 02.10.2007
(51) Int. Cl.: B60R 5/04

(54) **Laderaumabdeckung**

(30) Priorität: 06.10.2006 DE 102006048324
(71) Anmelder: BOS GmbH & Co. KG, 73760 Ostfildern (DE)
(72) Erfinder: Ehrenberger, Marina, 73061 Ebersbach (DE); Schlecht, Werner, P., 71665 Vaihingen/Enz (DE)
(74) Vertreter: Patentanwälte Ruff, Wilhelm, Beier, Dauster & Partner

(57) **Zusammenfassung**

Die Erfindung betrifft eine Laderaumabdeckung für ein Fahrzeug, insbesondere für ein Fahrzeug (1) mit einem zu einem Fahrgastraum (10) verbindbar angrenzenden Laderaum (11) wie ein Kombi- und/oder Van-Fahrzeug, umfassend eine als flexibles Flächengebilde ausgebildete Abdeckung (3) und eine Haltevorrichtung (13), durch welche die Abdeckung (3) in dem Fahrzeug (1) mindestens in einer ersten Position, in welcher die Abdeckung (3) im Wesentlichen vertikal angeordnet ist und den Fahrgastraum (10) von dem Laderaum (11) trennt, und in einer zweiten Position, in welcher die Abdeckung (3) im Wesentlichen horizontal angeordnet ist und den Laderaum (11) abdeckt, anbringbar ist, wobei die Abdeckung als einteiliges textiles Flächengebilde mit mindestens einem ersten, im Wesentlichen intransparenten Abschnitt (30) und einem zweiten, im Wesentlichen transparenten Abschnitt (32) ausgebildet ist.

Die Erfindung betrifft weiter ein Verfahren zur Herstellung einer Laderaumabdeckung (2).

## Beschreibung

Die Erfindung betrifft eine Laderaumabdeckung für ein Fahrzeug, insbesondere für ein Fahrzeug mit einem zu einem Fahrgastraum verbindbar angrenzenden Laderaum wie ein Kombi- und/oder Van-Fahrzeug, umfassend eine als flexibles Flächengebilde ausgebildete Abdeckung und eine Haltevorrichtung, durch welche die Abdeckung in dem Fahrzeug mindestens in einer ersten Position, in welcher die Abdeckung im Wesentlichen vertikal angeordnet ist und den Fahrgastraum von dem Laderaum trennt, und in einer zweiten Position, in welcher die Abdeckung im Wesentlichen horizontal angeordnet ist und den Laderaum abdeckt, anbringbar ist.

Laderaumabdeckungen sind allgemein bekannt. Die als Flächengebilde ausgebildete Abdeckung ist dabei vorzugsweise aus einem festen Gewebe- oder Planenmaterial hergestellt, so dass bei einer Anbringung in der ersten Position im Laderaum verstautes Gepäck sicher zurückgehalten wird, insbesondere im Fall eines Crashs und/oder bei einer Vollbremsung. Hierfür wird vorzugsweise ein Sicherungsnetz oder ein anderes Flächengebilde, welches ein Durchsehen erlaubt, verwendet, um eine Sicht eines Fahrzeugführers insbesondere nach hinten nicht zu beschränken.

Durch Anbringen der Abdeckung in der zweiten, im Wesentlichen horizontalen Ausrichtung, ist ein Gepäck ebenfalls in einem Laderaum sicherbar. Durch Verwenden eines intransparenten oder blickdichten Materials für die Abdeckung ist es möglich, im Laderaum verstautes Gepäck vor unerwünschten Blicken zu schützen. Durch Verwendung einer blickdichten Abdeckung in der ersten, im Wesentlichen vertikalen Anordnung, ist jedoch ein Sichtbereich eines Fahrzeugführers nach hinten eingeschränkt.

Aus der DE 103 48 892 A1 ist eine Laderaumabdeckung mit einer Abdeckung, welche einen ersten Flächenstrukturabschnitt aus einer blickdichten Folienbahn und einen zweiten Flächenstrukturabschnitt aus einem Netzgewebe aufweist, bekannt.

Es ist Aufgabe der vorliegenden Erfindung, eine Abdeckung zu schaffen, durch welche ein in einem Laderaum angeordnetes Gepäck zumindest teilweise vor unerwünschten Blicken geschützt ist, durch welche ein Sichtbereich eines Fahrzeugführers nach hinten nicht oder nur unwesentlich eingeschränkt ist und welche einfach fertigbar ist. Es ist weiter Aufgabe der vorliegenden Erfindung, ein Verfahren zur Herstellung einer derartigen Laderaumabdeckung zu schaffen.

Diese Aufgabe wird gelöst durch die Gegenstände mit den Merkmalen der Ansprüche 1 und 17. Weitere Vorteile der Erfindung ergeben sich aus den Unteransprüchen.

Die Aufgabe wird insbesondere gelöst durch eine Laderaumabdeckung für ein Fahrzeug, insbesondere für ein Fahrzeug mit einem zu einem Fahrgastraum verbindbar angrenzenden Laderaum wie ein Kombi- und/oder Van-Fahrzeug, umfassend eine als flexibles Flächengebilde ausgebildete Abdeckung und eine Haltevorrichtung, durch welche die Abdeckung in dem Fahrzeug mindestens in einer ersten Position, in welcher die Abdeckung im Wesentlichen vertikal angeordnet ist und den Fahrgastraum von dem Laderaum trennt, und in einer zweiten Position, in welcher die Abdeckung im Wesentlichen horizontal angeordnet ist und den Laderaum zumindest teilweise abdeckt, anbringbar ist, wobei die Abdeckung als einteiliges textiles Flächengebilde mit mindestens einem ersten, im Wesentlichen intransparenten Abschnitt und einem zweiten, im Wesentlichen transparenten Abschnitt ausgebildet ist.

Als "transparentes" Flächengebilde im Sinne der Erfindung wird ein Flächengebilde bezeichnet, das ganz oder teilweise durchsichtig ist. Als "intransparent" wird dagegen ein undurchsichtiges oder blickdichtes Flächengebilde bezeichnet.

Die Abdeckung ist als ein textiles Flächengebilde, insbesondere als Vliesstoff, Gestricke, Gewebe und/oder Gewirke gefertigt. Ein derartige Abdeckung ist besonderes einfach und kostengünstig fertigbar. Ein Gewebe ist ein im Regelfall rechtwinkliges Flächengebilde aus Kettfäden und quer dazu verlaufenden Schussfäden. Eigenschaften eines Gewebes sind beeinflusst durch ein verwendetes Fasermaterial, eine Faserdichte und/oder eine Webart oder Bindung. Durch Verwendung von Glasfasern oder glasfaserverstärkten Kunststoffen ist ein Gewebe mit einer hohen Festigkeit realisierbar. Als Gewirke wird dagegen ein durch Maschenbildung geschaffenes Flächengebilde bezeichnet. Gewirke sind aus Kuliergewirke oder Kettengewirke herstellbar. Gewirke weisen üblicherweise eine Elastizität auf. Das gewählte Material und/oder die Bindungs- oder Maschenart der Abdeckung schaffen vorzugsweise eine Abdeckung mit ausreichender Festigkeit, um im Laderaum angeordnete Gegenstände und/oder Gepäckstücke auch bei einem Unfall sicher zurück halten zu können.

Die Abdeckung weist mindestens einen transparenten Abschnitt auf. In einer Ausgestaltung sind mehrere transparente Abschnitte vorgesehen. Der transparente Abschnitt ist oder die transparenten Abschnitte sind so angeordnet, dass eine Sichtbeschränkung zumindest in einem durch einen Rückspiegel einsehbaren Blickfeld nicht oder nur unwesentlich aufgrund der Abdeckung beschränkt ist. Aufgrund des intransparenten oder blickdichten Abschnitts der Abdeckung sind im Laderaum angeordnete Gegenstände wie Gepäckstücke durch die Abdeckung zumindest teilweise derart abdeckbar, dass sie vor ungewünschten Blicken geschützt sind. Die erfindungsgemäße Abdeckung erfüllt somit zwei Funktionen und ist dadurch besonders vielseitig einsetzbar.

In einer Weiterbildung der Laderaumabdeckung ist erste Abschnitt fester und/oder mit mehr Fäden gefertigt als der zweite Abschnitt. Eine höhere Festigkeit ist beispielsweise durch Bildung von mehr Maschen pro Bereich bei einem Gewirke und/oder mehr Bindungen bei einem Gewebe erzielbar.

In einer Weiterbildung der Laderaumabdeckung sind der erste und der zweite Abschnitt als aneinander angrenzende Bahnen ausgebildet, insbesondere als zwei an den Längsseiten aneinander angrenzende, im Wesentlichen rechteckförmige Bahnen. Eine derartige Abdeckung ist besonders einfach beispielsweise als Gewebe oder Gewirke fertigbar. Bei einer geeigneten Anbringung im Fahrzeug ermöglicht es der bahnartige, transparente Abschnitt einem Fahrzeugführer, den Verkehr und anderes hinter ihm gut zu beobachten. Die kürzeren Seiten der Bahnen sind bevorzugt bündig ausgerichtet. Es sind jedoch auch Ausführungsformen mit zwei unterschiedlich langen Bahnen denkbar.

In einer Weiterbildung der Laderaumabdeckung ist mindestens ein Zusatzflächengebilde einteilig an der Abdeckung angeformt, durch welches der zweite Abschnitt zumindest teilweise überlappbar ist, wobei bei Überlappung der aus dem Zusatzflächengebilde und dem zweiten Abschnitt gebildete Bereich der Abdeckung im Wesentlichen intransparent ist. Durch Überlappung des zweiten Abschnitts mit dem Zusatzflächengebilde ist somit der intransparente Anteil der Abdeckung vergrößert. Durch geeignete Anbringung der Abdeckung im Fahrzeug bei Überlappung sind somit unter der Abdeckung angeordnete Gegenstände besser vor Blicken schützbar. Das Zusatzflächengebilde ist in einer Ausführungsform intransparent. In einer anderen Ausführungsform ist das Zusatzflächengebilde transparent, wobei durch eine Überlappung des Zusatzflächengebildes und des transparenten Abschnitts ein mehrlagiges, insbesondere zweilagiges, intransparentes Flächengebilde realisiert ist. Das Zusatzflächengebilde überlappt in einer Ausführungsform zumindest teilweise auch den ersten Abschnitt.

In einer Weiterbildung der Laderaumabdeckung ist das Zusatzflächengebilde in einem Übergang zwischen dem ersten und dem zweiten Abschnitt mit der Abdeckung verbunden. Der erste Abschnitt, der zweite Abschnitt und das Zusatzflächengebilde sind in einer Ausführungsform mehrteilig als textile Gewebe und/oder Gewirke hergestellt und durch eine Naht oder mehrere Nähte miteinander verbunden.

In einer Weiterbildung der Laderaumabdeckung ist die Anzahl der für einen ersten Abschnitt verwendeten Kettfäden aufgeteilt, um so den zweiten Abschnitt und das einteilig an der Abdeckung angeformte Zusatzflächengebilde zu schaffen. Eine derartige Abdeckung weist vorzugsweise keine Nahtstellen für eine Verbindung auf. Dadurch ist eine einfache Fertigung der Abdeckung mit hoher Verbindungsgüte realisierbar.

In einer Weiterbildung der Laderaumabdeckung weisen das Zusatzflächengebilde und der zweite Abschnitt komplementäre Verbindungsmittel, insbesondere Rastmittel, Druckknöpfe oder einen Klettverschluss auf, durch welche sie bei Überlappung miteinander verbindbar sind. Durch die Verbindung bei Überlappung wird somit eine Abdeckung geschaffen, welche einen ersten, intransparenten Abschnitt aufweist sowie einen mehrlagigen Bereich, umfassend den zweiten, transparenten Abschnitt und das mit diesem überlappende Zusatzflächengebilde. Eine derartige Abdeckung ist ganz oder zumindest in den wesentlichen Bereichen intransparent.

In einer Weiterbildung umfasst die Laderaumabdeckung ein Konturteil zum Anpassen an einen Laderaum. Das Konturteil ist dabei derart fertigbar, dass eine gute Anpassung an eine Heckform und/oder eine Form des Laderaums eines bestimmten Fahrzeugs möglich ist. Dadurch ist eine Fertigung der Abdeckung als einheitliches, oder zumindest im Wesentlichen einheitliches Massenprodukt möglich, wobei eine individuelle Anpassung an spezielle Fahrzeugtypen durch das Konturteil erfolgt. Das Konturteil ist in einer Ausführungsform ein intransparentes Flächengebilde. Alternativ oder zusätzlich ist das Konturteil zumindest teilweise verstärkt, beispielsweise durch eine Hartfaserplatte oder ähnliches.

In einer Weiterbildung der Laderaumabdeckung ist der zweite Abschnitt zwischen dem ersten Abschnitt und dem Konturteil angeordnet. Mit anderen Worten schließt das Konturteil an die Abdeckung, umfassend den ersten Abschnitt und den zweiten Abschnitt, an. An der Abdeckung kann dabei das Zusatzflächengebilde angeformt sein.

In einer anderen Ausgestaltung der Laderaumabdeckung ist das Zusatzflächengebilde zwischen dem ersten Abschnitt und dem Konturteil angeordnet. Das Konturteil ist in einer Ausführungsform einteilig mit dem Zusatzflächengebilde gefertigt und gemeinsam mit diesem mit der Abdeckung verbunden.

In einer Weiterbildung umfasst die Laderaumabdeckung eine Wickelwelle, wobei die Abdeckung an der Wickelwelle auf- und abwickelbar angebracht ist. Die Wickelwelle ermöglicht ein platzsparendes Verstauen der Abdeckung bei Nichtgebrauch. Gleichzeitig ermöglicht die Wickelwelle ein einfaches Abziehen der Abdeckung von der Wickelwelle und damit eine einfache Handhabung der Laderaumabdeckung. Die Wickelwelle ist in einer Ausführungsform fest an einer Rückseite einer Rücksitzbank eines Fahrzeugs angebracht. Die Abdeckung ist dabei derart von der Wickelwelle abziehbar, dass sie in der ersten, im Wesentlichen vertikalen Anordnung oder der zweiten, im Wesentlichen horizontalen Anordnung in dem Fahrzeug anbringbar ist. In einer anderen Ausführungsform ist die Wickelwelle lösbar mit dem Fahrzeug verbunden. Die Wickelwelle ist dabei beispielsweise in verschiedenen Positionen an dem Fahrzeug anbringbar.

In einer Weiterbildung umfasst die Laderaumabdeckung ein Auszugsrohr, wobei die Abdeckung an dem Auszugsrohr angebracht ist. Das Auszugsrohr ermöglicht eine stabile Handhabung der auf der Wickelwelle angebrachten Abdeckung.

In einer Weiterbildung der Laderaumabdeckung weist das Zusatzflächengebilde Verbindungsmittel, insbesondere Rastmittel, auf, durch welche es an dem Auszugsrohr lösbar befestigbar ist, insbesondere mit dem Auszugsrohr verrastbar ist. Durch ein Verrasten ist eine einfache Handhabung der Abdeckung gemeinsam mit dem die Abdeckung zumindest teilweise überlappenden Zusatzflächengebilde möglich. Die Verrastung ist in einer Ausführungsform manuell durch direktes Aufbringen einer Lösekraft lösbar. In einer anderen Ausführungsform ist eine Lösemechanik vorgesehen.

In einer Weiterbildung der Laderaumabdeckung ist das Auszugsrohr in einer Schienenführung geführt. Die Schienenführung umfasst vorzugsweise zwei seitlich an dem Fahrzeug angeordnete, parallele Schienen. Die Schienenführung ist in einer Ausführungsform derart angebracht, dass die Abdeckung bei einer Bewegung in die erste, im Wesentlichen vertikale Anordnung geführt ist. Am Ende der Schienenführung kann dabei eine geeignete Kontur und/oder Lösemechanik vorgesehen sein, so dass eine Verrastung des Zusatzflächengebildes mit der Abdeckung bei Erreichen der ersten Position automatisch gelöst wird. Alternativ und/oder zusätzlich kann die Schienenführung derart angeordnet sein, dass die Abdeckung bei einer Bewegung in die zweite, im Wesentlichen horizontale Anordnung geführt ist.

In einer Weiterbildung umfasst die Laderaumabdeckung einen Antrieb, insbesondere einen elektrischen Antrieb, wobei die Abdeckung durch den Antrieb von der Wickelwelle abwickelbar und/oder auf die Wickelwelle aufwickelbar ist.

In einer Weiterbildung der Laderaumabdeckung ist der erste Abschnitt beschichtet. Die Beschichtung ist dabei vorzugsweise aus einem gegen UV-Strahlen beständigen Material hergestellt.

Die Aufgabe wird weiter gelöst durch ein Verfahren zur Herstellung einer Laderaumabdeckung, umfassend eine als flexibles Flächengebilde ausgebildete Abdeckung, welche einteilig aus einem textilen Flächengebilde mit mindestens einem ersten, im Wesentlichen intransparenten Abschnitt und einem zweiten, im Wesentlichen transparenten Abschnitt ausgebildet wird. Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden dabei einheitliche Bezugszeichen verwendet. Sämtliche aus den Ansprüchen, der Beschreibung oder den Zeichnungen hervorgehende Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Zeichnungen zeigen:
- Fig. 1: eine perspektivische Darstellung eines Fahrzeugs mit einer Laderaumabdeckung gemäß einem ersten Ausführungsbeispiel der Erfindung in einer ersten Position,
- Fig. 2: die Laderaumabdeckung gemäß Fig. 1 in einer zweiten Position,
- Fig. 3: ein Fahrzeug mit einer Laderaumabdeckung gemäß einem zweiten Ausführungsbeispiel in einer ersten Position,
- Fig. 4a: die Laderaumabdeckung gemäß Fig. 3 bei entferntem Zusatzflächengebilde,
- Fig. 4b: die Laderaumabdeckung gemäß Fig. 3 mit angebrachtem Zusatzflächengebilde,
- Fig. 5: ein Fahrzeug mit einer Laderaumabdeckung gemäß einem dritten Ausführungsbeispiel der Erfindung in einer ersten Position,
- Fig. 6a: die Laderaumabdeckung gemäß Fig. 5 bei entferntem Zusatzflächengebilde und
- Fig. 6b: die Laderaumabdeckung gemäß Fig. 5 bei angebrachtem Zusatzflächengebilde.

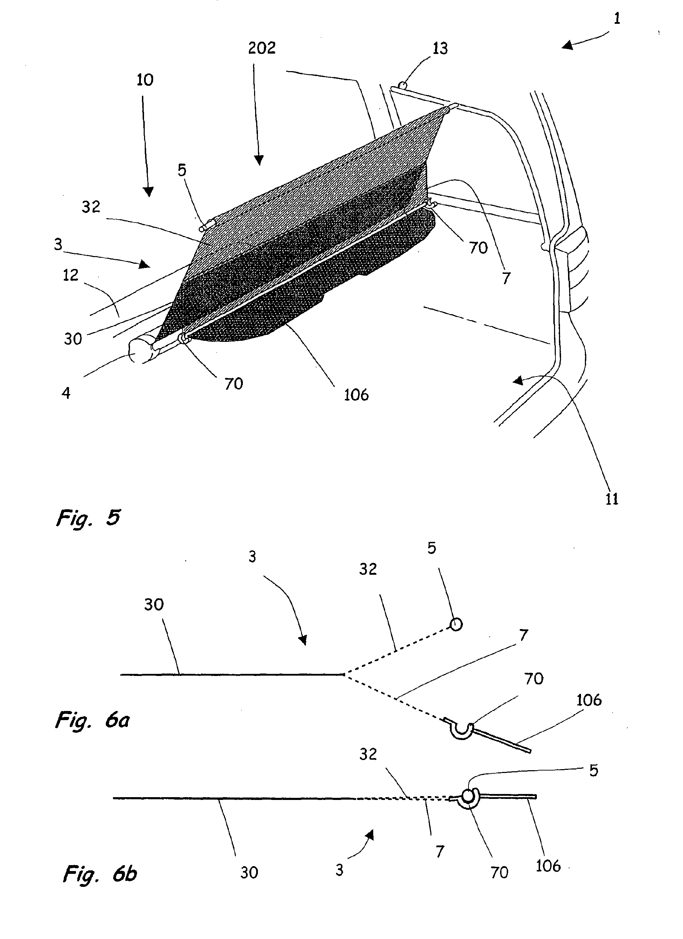

Fig. 1 und 2 zeigen schematisch einen Ausschnitt eines Fahrzeugs 1 mit einem Fahrgastraum 10 und einem Laderaum 11. Hinter einer Rückenlehne einer Rückbank 12 des Fahrzeugs 1 ist eine Laderaumabdeckung 2 gemäß einem ersten Ausführungsbeispiel der Erfindung angebracht. Die Laderaumabdeckung 2 umfasst eine als textiles Flächengebilde, insbesondere als Gewebe und/oder Gewirke, ausgebildete Abdeckung 3, welche an einer Wickelwelle 4 aus- und abwickelbar angeordnet ist. Zum Abwickeln der Abdeckung 3 von der Wickelwelle 4 ist ein Auszugsrohr 5 an der Abdeckung 3 angebracht. Die Abdeckung 3 ist durch Einhängen des Auszugrohrs 5 in zwei seitliche Haltevorrichtungen 13 des Fahrzeugs 1, von welchem in Fig. 1 nur eine sichtbar ist, in einer ersten Position, in einer im Wesentlichen vertikalen Ausrichtung in dem Fahrzeug 1 anbringbar. Durch Anbringen der Abdeckung 3 in der ersten, im Wesentlichen vertikalen Ausrichtung ist der Laderaum 11 von dem Fahrgastraum 10 getrennt. Im Falle einer Vollbremsung und/oder im Falle eines Unfalls sind im Laderaum 11 angeordnete Gegenstände, beispielsweise Gepäckstücke (nicht dargestellt), durch die Abdeckung 3 sicher zurückgehalten. Das Material und/oder die Herstellungsart der Abdeckung 3 ist für diese Zwecke geeignet zu wählen.

Erfindungsgemäß umfasst die Abdeckung 3 einen ersten im Wesentlichen blickdichten oder intransparenten Abschnitt 30 und einen zweiten, im Wesentlichen transparenten Abschnitt 32. Durch den transparenten Abschnitt 32 wird die Sicht eines Fahrzeugführers nach hinten durch Anbringen der Abdeckung 3 in der ersten, im Wesentlichen vertikalen Position, nicht oder zumindest nur unwesentlich eingeschränkt. In der dargestellten Ausführungsform sind die Abschnitte 30, 32 als zwei an ihren Längsseiten aneinander angrenzende Bahnen ausgebildet.

Selbstverständlich ist es jedoch auch möglich, einen transparenten Abschnitt oder mehrere transparente Abschnitte durch davon abweichende geeignete Muster vorzusehen.

Wie in Fig. 2 angedeutet, ist die Abdeckung 3 weiter in einer zweiten, im Wesentlichen horizontalen Ausrichtung in dem Fahrzeug 1 anbringbar. An dem Fahrzeug 1 ist hierfür einen geeignete, nicht dargestellte Haltevorrichtung vorgesehen. An dem Auszugsrohr 5 ist ein Konturteil 6 angeordnet. Durch das Konturteil 6 ist die Laderaumabdeckung 2 an eine spezielle Bauform des Fahrzeugs 1 anpassbar. In dem in Fig. 1 und 2 dargestellten Ausführungsbeispiel sind der erste Abschnitt 30 und das Konturteil 6 blickdicht oder intransparent ausgebildet. Durch geeignete Anordnung von nicht dargestellten Gegenständen in dem Laderaum 11, insbesondere von Gepäckstücken, sind diese durch die Laderaumabdeckung 2 vor unerwünschten Blicken schützbar.

Die dargestellte Abdeckung 3 ist auf der Wickelwelle 4 angebracht. Die Wickelwelle 4 ist fest oder lösbar an der Rückbank 12 angebracht. In einer anderen Ausführungsform ist die Abdeckung 3 durch andere Haltevorrichtung in der ersten und/oder der zweiten Position an dem Fahrzeug 1 anbringbar.

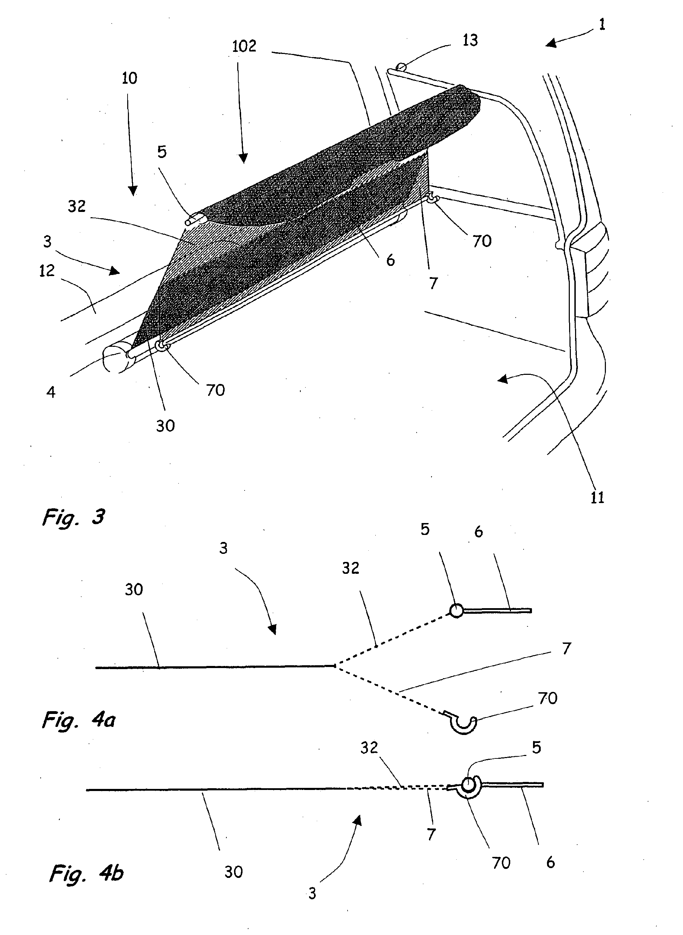

Fig. 3 zeigt ein zweites Ausführungsbeispiel einer erfindungsgemäßen Laderaumabdeckung 102. Die Laderaumabdeckung 102 entspricht im Wesentlichen der Laderaumabdeckung 2 gemäß Fig. 1 und für gleiche Bauteile werden einheitliche Bezugszeichen verwendet. Auf eine Beschreibung dieser Bauteile wird verzichtet. Die Laderaumabdeckung 102 umfasst neben der Abdeckung 3 und dem Konturteil 6 ein Zusatzflächengebilde 7, welches einteilig an der Abdeckung 3 angeformt ist. In der dargestellten Ausführungsform ist das Zusatzflächengebilde 7 in einem Übergang zwischen dem ersten, intransparenten oder blickdichten Abschnitt 30 und dem zweiten, transparenten Abschnitt 32 angeformt. In einer Ausführungsform werden Kettfäden eines den Abschnitt 30 bildenden Gewebes 30 aufgeteilt, um so das Zusatzflächengebilde 7 und den zweiten Abschnitt 32 zu bilden einteilig an dem Abschnitt 30 anzuformen.

Das Zusatzflächengebilde 7 ist in dem in Fig. 3 dargestellten Zustand nicht in Deckung mit dem transparenten Abschnitt 32. Das Zusatzflächengebilde 7 ist jedoch derart anordenbar, dass der zweite Abschnitt 32 überlappt ist. In der dargestellten Ausführungsform ist eine Überlappung der gesamten Fläche des zweiten Abschnitts 32 durch das Zusatzflächengebilde 7 möglich. Aufgrund der Überlappung oder Überdeckung ist die Abdeckung 3 im Bereich des zweiten Abschnitts 32 doppellagig und dadurch intransparent oder blickdicht.

In dem in Fig. 3 dargestellten Ausführungsbeispiel sind an dem freien Ende des Zusatzflächengebildes 7 Rastmittel 70 vorgesehen, durch welche das Zusatzflächengebilde 7 bei Überlappung des zweiten Abschnitts 32 an dem Auszugsrohr 5 befestigbar, insbesondere anclipsbar, ist. Die Abdeckung 3 und das einteilig daran angeformte Zusatzflächengebilde 7 sind so gemeinsam auf die Wickelwelle 4 aufwickelbar und/oder von dieser abwickelbar. Ein Auf- und/oder Abwickeln ist manuell oder elektrisch möglich. Das Auszugsrohr 5 ist beispielsweise in nicht dargestellten Schienen führbar. Dabei ist es denkbar, die Abdeckung 3 mit der an dem Auszugsrohr 5 verrasteten Zusatzflächengebilde 7 manuell oder durch einen Antrieb in die erste Position mit im Wesentlichen vertikaler Ausrichtung zu bewegen. In dieser Position sind die Rastmittel 70 von dem Auszugsrohr 5 lösbar und das Zusatzflächengebilde 7 ist nicht länger in Überdeckung mit dem zweiten Abschnitt 32. Ein Lösen der Rastmittel 70 von dem Auszugsrohr 7 ist dabei manuell möglich. In einer anderen Ausführungsform wird eine Verrastung über eine geeignete Kontur und/oder eine geeignete Mechanik automatisch gelöst.

Fig. 4a und 4b zeigen schematisch die Abdeckung 3 mit dem einteilig daran angeordneten Zusatzflächengebilde 7. Das Konturteil 6 ist in dem Ausführungsbeispiel an dem Auszugsrohr 5 befestigt. Das Zusatzflächengebilde 7 kann aus einem ersten, in Fig. 4a dargestellten, gelösten Zustand in einen zweiten, in Fig. 4b dargestellten, verrasteten Zustand gebracht werden. In dem zweiten Zustand überdeckt oder überlappt das Zusatzflächengebilde 7 den transparenten Abschnitt 32. In dem dargestellten Ausführungsbeispiel ist das Zusatzflächengebilde 7 ebenfalls transparent gestaltet. Sowohl der zweite Abschnitt 32 als auch das Zusatzflächengebilde 7 erlauben es somit, dass durch sie hindurchgesehen wird. Erst durch die Überdeckung oder Überlappung wird ein blickdichter Abschnitt geschaffen.

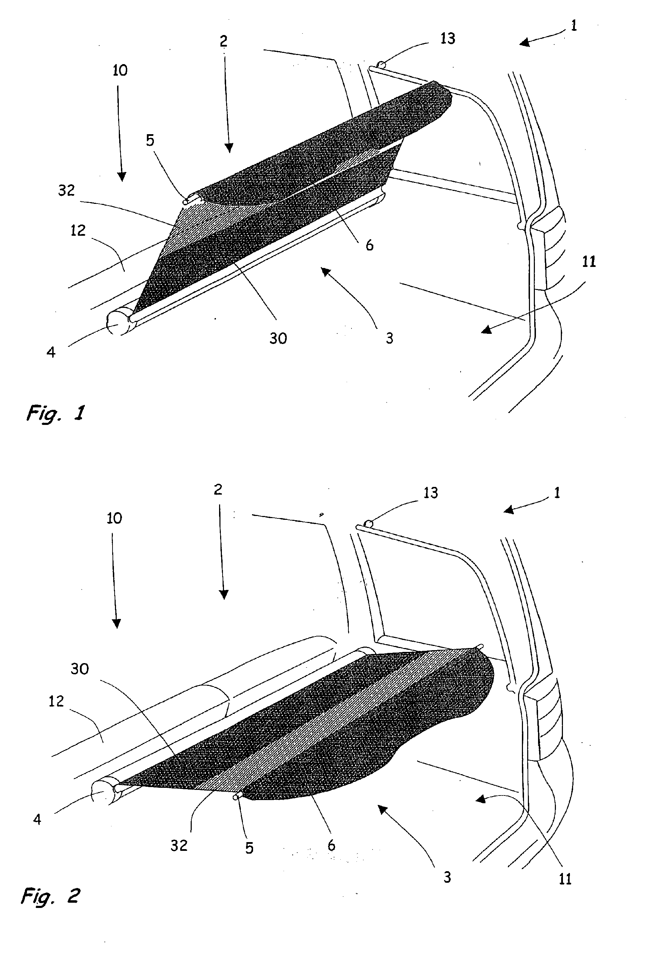

Fig. 5 zeigt ein drittes Ausführungsbeispiel einer erfindungsgemäßen Laderaumabdeckung, 202. Die Laderaumabdeckung 202 entspricht dabei im Wesentlichen der Laderaumabdeckung 102 gemäß Fig. 3 und auf die Beschreibung gleicher Bauteile wird verzichtet. Die Laderaumabdeckung 202 umfasst die Abdeckung 3, an welcher im Übergang zwischen dem blickdichten Abschnitt 30 und dem transparenten Abschnitt 32 das Zusatzflächengebilde 7 angeformt ist. An dem von der Abdeckung 3 abgewandten Ende des Zusatzflächengebildes 7 ist ein Konturteil 106 angebracht.

Fig. 6a und 6b zeigen schematisch die Abdeckung 3 mit dem daran angeordneten Zusatzflächengebilde 7. Das Zusatzflächengebilde 7 ist über die Rastmittel 70 mit dem Auszugsrohr 5 verbindbar, so dass ein blickdichtes, teilweise mehrlagiges Flächengebilde geschaffen wird. Durch das Flächengebilde können Gegenstände in einem Laderaum eines Fahrzeugs vor unerwünschten Blicken geschützt werden können. Durch das mit dem Zusatzflächengebilde 7 verbundene Konturteil 106 ist eine gute Anpassung an eine Form eines Fahrzeughecks möglich.

Die Abdeckung 3, das Zusatzflächengebilde 7 und das Konturteil 6 sind aus einem textilen Flächengebilde, insbesondere einem Vliesstoff, Gestricke, Gewebe und/oder Gewirke gefertigt. Durch eine geeignete Fertigungstechnik, beispielsweise eine geeignete Webtechnik und/oder eine geeignete Maschenbildung, ist dabei ein erster Abschnitt 30 der Abdeckung 3 absolut blickdicht oder intransparent gestaltbar. Ebenso sind die Konturteile 6, 106 vorzugsweise blickdicht gestaltet. Der transparente Abschnitt 32 ist dagegen derart gestaltet, dass ein Durchsehen möglich ist. Dies ist beispielsweise durch eine geringe Maschinendichte, eine geringe Bindungsdichte und/oder durch Verwendung einer geringeren Anzahl an Fäden, insbesondere an Kett- und/oder Schussfäden, möglich. Durch die Verwendung eines geeigneten Materials ist sichergestellt, dass auch der transparente Abschnitt 32 crashsicher gestaltet ist. Die Laderaumabdeckungen 2, 102, 202 sind somit für den Einsatz als Schutzabdeckung in dem Fahrzeug 1 geeignet.

Ein Zusatzflächengebilde 7 ist in den dargestellten Ausführungsformen einteilig an einer Abdeckung 3 angeformt, wobei die Anzahl der für den ersten, blickdichten Abschnitt verwendeten Fäden zur Fertigung des zweiten, transparenten Abschnitts und des Zusatzflächengebildes in geeigneter Weise aufgeteilt wird. In anderen Ausführungsformen werden der erste Abschnitt, der zweite Abschnitt und/oder das Zusatzflächengebilde getrennt hergestellt und anschließend an einer geeigneten Stelle miteinander verbunden.

## Patentansprüche

1. Laderaumabdeckung für ein Fahrzeug, insbesondere für ein Fahrzeug (1) mit einem zu einem Fahrgastraum (10) verbindbar angrenzenden Laderaum (11) wie ein Kombi- und/oder Van-Fahrzeug, umfassend eine als flexibles Flächengebilde ausgebildete Abdeckung (3) und eine Haltevorrichtung (13), durch welche die Abdeckung (3) in dem Fahrzeug (1) mindestens in einer ersten Position, in welcher die Abdeckung (3) im Wesentlichen vertikal angeordnet ist und den Fahrgastraum (10) von dem Laderaum (11) trennt, und in einer zweiten Position, in welcher die Abdeckung (3) im Wesentlichen horizontal angeordnet ist und den Laderaum (11) zumindest teilweise abdeckt, anbringbar ist,
**dadurch gekennzeichnet, dass**
die Abdeckung als einteiliges textiles Flächengebilde mit mindestens einem ersten, im Wesentlichen intransparenten Abschnitt (30) und einem zweiten, im Wesentlichen transparenten Abschnitt (32) ausgebildet ist.

2. Laderaumabdeckung nach Anspruch 1, **dadurch gekennzeichnet, dass** der erste Abschnitt (30) fester und/oder mit mehr Fäden gebildet ist als der zweite Abschnitt (32).

3. Laderaumabdeckung nach Anspruch 1 oder 2, **dadurch gekennzeichnet, dass** der erste und der zweite Abschnitt (30, 32) als aneinander angrenzende Bahnen ausgebildet sind, insbesondere als zwei an den Längsseiten aneinander angrenzende, im Wesentlichen rechteckförmige Bahnen.

4. Laderaumabdeckung nach Anspruch 1, 2 oder 3, **dadurch gekennzeichnet, dass** mindestens ein Zusatzflächengebilde (7) einteilig an der Abdeckung (3) angeformt ist, durch welches der zweite Abschnitt (32) zumindest teilweise überlappbar ist, wobei bei Überlappung der aus dem Zusatzflächengebilde und dem zweiten Abschnitt gebildete Abschnitt im Wesentlichen intransparent ist.

5. Laderaumabdeckung nach Anspruch 4, **dadurch gekennzeichnet, dass** das Zusatzflächengebilde (7) in einem Übergang zwischen dem ersten und dem zweiten Abschnitt (30, 32) mit der Abdeckung (3) verbunden ist.

6. Laderaumabdeckung nach Anspruch 5, **dadurch gekennzeichnet, dass** für den ersten Abschnitt (30) verwendete Kettfäden aufgeteilt sind, um so den zweiten Abschnitt (32) und das einteilig an der Abdeckung (3) angeformte Zusatzflächengebilde (7) zu bilden.

7. Laderaumabdeckung nach Anspruch 4, 5 oder 6, **dadurch gekennzeichnet, dass** das Zusatzflächengebilde (7) und der zweite Abschnitt komplementäre Verbindungsmittel, insbesondere Rastmittel, Druckknöpfe oder einen Klettverschluss aufweisen, durch welche sie bei Überlappung miteinander verbindbar sind.

8. Laderaumabdeckung nach einem der Ansprüche 1 bis 7, umfassend ein Konturteil (6, 106) zum Anpassen an eine Laderaum (11).

9. Laderaumabdeckung nach Anspruch 8, **dadurch gekennzeichnet, dass** der zweite Abschnitt (32) zwischen dem ersten Abschnitt ' (30) und dem Konturteil (6) angeordnet ist.

10. Laderaumabdeckung nach Anspruch 9, **dadurch gekennzeichnet, dass** das Zusatzflächengebilde (7) zwischen dem ersten Abschnitt (30) und dem Konturteil (106) angeordnet ist.

11. Laderaumabdeckung nach einem der vorangegangenen Ansprüche, umfassend eine Wickelwelle (4), wobei die Abdeckung (3) an der Wickelwelle (4) auf- und abwickelbar angebracht ist.

12. Laderaumabdeckung nach Anspruch 11, umfassend ein Auszugsrohr (5), wobei die Abdeckung (3) an dem Auszugsrohr (5) angebracht ist.

13. Laderaumabdeckung nach Anspruch 12, **dadurch gekennzeichnet, dass** das Zusatzflächengebilde (7) Verbindungsmittel, insbesondere Rastmittel (70), aufweist, durch welche es an dem Auszugsrohr (5) lösbar befestigbar ist, insbesondere mit dem Auszugsrohr (5) verrastbar ist.

14. Laderaumabdeckung nach Anspruch 12 oder 13, **dadurch gekennzeichnet, dass** das Auszugsrohr (5) in einer Schienenführung geführt ist.

15. Laderaumabdeckung nach einem der Ansprüche 11 bis 14, umfassend einen Antrieb, insbesondere einen elektrischen Antrieb, wobei die Abdeckung (3) durch den Antrieb von der Wickelwelle (4) abwickelbar und/oder auf die Wickelwelle (4) aufwickelbar ist.

16. Laderaumabdeckung nach einem der vorangegangenen Ansprüche, **dadurch gekennzeichnet, dass** der erste Abschnitt (30) beschichtet ist.

17. Verfahren zur Herstellung einer Laderaumabdeckung, umfassend eine als flexibles Flächengebilde ausgebildete Abdeckung (3),
**dadurch gekennzeichnet, dass**
die Abdeckung (3) einteilig aus einem textilen Flächengebilde mit mindestens einem ersten, im Wesentlichen intransparenten Abschnitt (30) und einem zweiten, im Wesentlichen transparenten Abschnitt (32) ausgebildet wird.

18. Verfahren nach Anspruch 17, **dadurch gekennzeichnet, dass** der erste Abschnitt (30) fester und/oder mit mehr Fäden gefertigt wird als der zweite Abschnitt (32).

19. Verfahren nach Anspruch 17 oder 18, **dadurch gekennzeichnet, dass** ein Zusatzflächengebilde (7) in einem Übergang zwischen dem ersten und dem zweiten Abschnitt (30, 32) an der Abdeckung (3) angeformt wird.

20. Verfahren nach Anspruch 19, **dadurch gekennzeichnet, dass** für den ersten Abschnitt (30) verwendete Kettfäden in einen erste Kettfadengruppe und eine zweite Kettfadengruppe aufgeteilt werden, wobei der zweite Abschnitt (32) aus der ersten Kettfadengruppe und das Zusatzflächengebilde (7) aus der zweiten Kettfadengruppe gebildet wird.
